Europäisches Patentamt

European Patent Office

Office européen des brevets

(11) Publication number: **0 521 508 A2**

# EUROPEAN PATENT APPLICATION

(21) Application number: **92111237.1**

(22) Date of filing: **02.07.92**

(51) Int. Cl.5: **H01M 4/42**, B22F 1/00,
//C22C18/00

(30) Priority: **03.07.91 JP 162657/91**

(43) Date of publication of application:
**07.01.93 Bulletin 93/01**

(84) Designated Contracting States:
**BE CH DE FR GB IT LI NL SE**

(71) Applicant: **MATSUSHITA ELECTRIC**
**INDUSTRIAL CO., LTD**
**1006, Oaza Kadoma, Kadoma-shi**
**Osaka 571(JP)**

(72) Inventor: **Okubo, Kazutoshi**
**832-43, Misato, Heguricho**
**Ikoma-gu, Nara-ken(JP)**
Inventor: **Inoue, Koichi**
**15-3, Fujisaka Higashimachi-2-chome**
**Hirakata-shi(JP)**
Inventor: **Mototani, Yuji**
**37-7, Yawata Angozuka**
**Yawata-shi(JP)**
Inventor: **Kitagawa, Kohei**
**4-22-1202, Kamishinden-4-chome**
**Toyonaka-shi(JP)**
Inventor: **Sato, Koichi**
**23-17, Ikenomiya-2-chome**
**Hirakata-shi(JP)**

(74) Representative: **Patentanwälte Leinweber &**
**Zimmermann**
**Rosental 7/II Aufg.**
**W-8000 München 2(DE)**

(54) Method of producing zinc alloy powder for cell and alkaline cell with the zinc alloy powder.

(57) In order to clean a zinc alloy powder for an alkaline cell, the zinc alloy powder is dispersed in water or an acid or alkaline aqueous solution used as a medium under agitation so that impurities which adhere to the surfaces of the zinc alloy powder are separated and removed as suspended substances. Magnetic impurities mixed in the zinc alloy powder are removed by magnetically sorting the powder before or after the treatment using a medium, thereby improving the cleaning circuit.

BACKGROUND OF THE INVENTION

Field of the Invention

The present invention relates to a method of producing a zinc alloy powder for the cathode of an alkaline cell, and particularly to a method of removing impurities which adhere to a zinc allow powder. The zinc alloy powder obtained by removing the impurities is used in an alkaline cell for improving the leaktightness, decreasing the scattering in cell performance and stabilizing the quality of products.

Description of the Related Art

An alkaline cell using zinc as a cathode active substance has the problem that an increase in the internal pressure of the cell, which is caused by the generation of hydrogen gas during storage of the cell, causes the electrolyte to be outwardly ejected, thereby deteriorating the leaktightness thereof. In some cases, there is a danger of bringing about the breakage of the cell.

As a measure against the problem, an amalgamated zinc powder to which mercury is added for increasing the hydrogen overvoltage of the surface of the zinc is used as the cathode active substance. On the other hand, in the world-wide concern about the problem of environmental disruption by industrial products, there is strong demand for decreasing the amount of mercury contained in an alkaline cell or developing a cell without mercury.

With the social need as background, an approach has been made to decrease the amount of mercury contained in an alkaline cell or to develop a cell without mercury. In addition, a technique of preventing the corrosion of zinc alloy composition (JP-A-63-6749) and an inorganic or organic inhibitor having the function to increase an anticorrosion effect (JP-A-2-299150) has been proposed and published. Further, an attempt has been made to restrict the generation of hydrogen gas and to improve the discharge performance by decreasing the content of impurities in zinc (JP-A-62-123653).

However, the above methods proposed could not obtain an alkaline cell with excellent corrosion resistance in which the scattering in cell performance is decreased, and the quality of products is stabilized at a high level, by using zinc alloy powder without mercury.

The present invention has been achieved to solve the above problems, and it is an object of the invention to provide a method of producing a zinc alloy powder without mercury for the cathode of an alkaline cell in which the corrosion resistance is improved by restricting the generation of hydrogen gas so that the leaktightness is improved, and the scattering in the cell performance is decreased, whereby the quality of alkaline cell products without mercury can be stabilized.

SUMMARY OF THE INVENTION

It was found that when a zinc alloy powder without mercury is used in an alkaline cell, the impurities which adhere to the surfaces of the zinc alloy powder, particularly the iron impurities easily mixed therein in the process of producing the zinc alloy powder, significantly activate the corrosion reaction and increase the generation of hydrogen gas. It is also found that hydrogen gas is continuously generated from portions of the surfaces of the zinc alloy powder where traces of iron impurities are unevenly distributed.

These findings indicate that the generation of hydrogen gas, which is caused by corrosion of the zinc alloy powder, can be restricted by removing the impurities adhering to the surfaces of the zinc alloy powder, thereby improving the corrosion resistance. This led to the achievement of the present invention.

The present invention comprises removing as suspended substances the impurities which adhere to the surfaces of a zinc alloy powder by dispersing the zinc alloy powder in water used as a medium under agitation.

A method of producing the zinc alloy powder generally used at the present time is an atomizing method. The method comprises the steps of melting and atomizing a desired zinc alloy to obtain a zinc alloy powder, classifying the resultant zinc alloy powder, and then adjusting the particle size distribution. Each of the steps is under an environment which allows iron impurities to adhere to the surfaces of the zinc alloy powder. A method is thus generally employed in which the impurities mainly consisting of iron and mixed in the zinc alloy powder are magnetically removed.

However, although this method is effective for an iron metal, the method has the problem that impurities cannot be completely removed by magnetic sorting because some of iron oxides, iron hydroxides and stainless impurities have a low magnetic effect, and because such impurities frequently adhere as fine particles to the surfaces of the zinc alloy powder.

Particularly, in the zinc alloy powder without mercury, iron impurities significantly activate the corrosion reaction because mercury having excellent anticorrosion effect is absent, and the generation of hydrogen gas is increased. Iron oxides, iron hydroxides, stainless impurities and the like are thus also important factors which significantly activate the corrosion reaction of the zinc alloy.

The inventors therefore found that the fine iron impurities which are easily mixed in a zinc alloy powder in the production process and which adhere to the surfaces of the zinc alloy powder can be effectively separated and removed as suspended substances by a method (referred to as "decantation" hereinafter) of dispersing the zinc alloy powder in water used as a medium under agitation, whereby the corrosion reaction of the zinc alloy powder without mercury can be restricted.

The corrosion resistance of the zinc alloy powder can be further improved by decantation using an acid or alkaline aqueous solution as a medium. It is supposed that this is because the function of the acid or alkaline aqueous solution to chemically polish the surfaces of the zinc alloy powder speeds up the separation of impurities from the surfaces of the zinc alloy powder, and improves the removing effect of decantation.

It was also confirmed that magnetic sorting performed before or after the decantation treatment can further restrict the corrosion reaction of the zinc alloy powder.

BRIEF DESCRIPTION OF THE DRAWINGS

Fig. 1 is a partially sectional front view showing a principal portion of a flotation apparatus for removing impurities fixed in a zinc alloy powder;
Fig. 2 is a schematic drawing showing a principal portion of a magnetic sorting apparatus having a magnetic pulley; and
Fig. 3 is a partially sectional side view showing a principal portion of an alkaline dry cell.

DETAILED DESCRIPTION OF THE INVENTION

The production method of the present invention is described below.

A zinc alloy powder used in the present invention is first obtained by a method, for example, comprising adding a predetermined metal to a zinc alloy melt and agitating the mixture to form a zinc alloy, atomizing the resultant alloy by compressed air to form a powder and then grading the powder by screening.

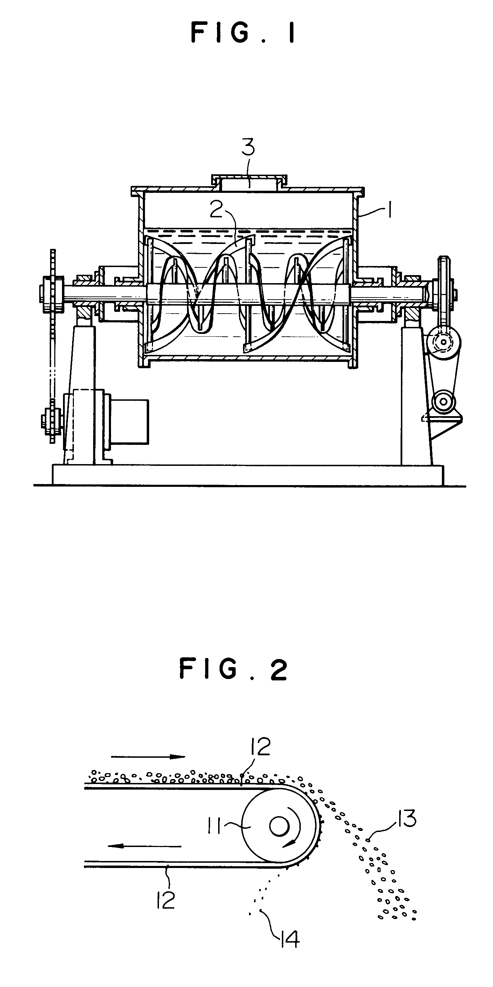

An example of the method of removing impurities mixed in the zinc alloy powder in accordance with the present invention is described below with reference to Fig. 1. The zinc alloy powder and water in an amount of 2 to 3 times the apparent volume of the powder are charged in a container 1 of the apparatus shown in Fig. 1. The zinc alloy powder is dispersed in the water in the three-dimensional direction by the rotation of a horizontal ribbon blade 2, and the impurities which adhere to the surfaces of the powder suspend in an upper layer in the water in the state of being suspended. The rotational speed of the ribbon blade 2 is decreased to a level which causes no sedimentation of the suspended substances, and the container 1 is then inclined so that the suspended substances in the upper layer of the water are discharged through the discharge port 3 provided in an upper portion of the container 1. The impurities which adhere to the surfaces of the zinc alloy powder can be removed by repeating the above process according to demand.

The thus-obtained zinc alloy powder is subjected to magnetic sorting by the apparatus shown in Fig. 2. The magnetic sorting method is described below.

The apparatus shown in Fig. 2 comprises a belt conveyor 12 provided with a magnetic pulley 11 having a magnet having strong magnetic force bonded to the surface thereof. When the zinc alloy powder 13 is moved on the belt conveyor 12, ferromagnetic substances 14 such as iron and the like which are mixed in the zinc alloy powder 13 or adhere to the surfaces thereof on the conveyor 12 in contact with the magnetic pulley 11 are moved while adhering to the magnetic pulley 11 through the belt and fall to a position substantially immediately below the magnetic pulley 11, as shown in Fig. 2. On the other hand, the zinc alloy powder 13 which is not affected by the magnet falls a distant position in the forward direction of the belt conveyor 12. The above principle and mechanism enable separation and division between the ferromagnetic substances such as iron and the like and the zinc alloy powder. The belt conveyor of the apparatus may be used in a single stage or in combination of several stages. This method permits the removal the impurities mainly consisting of metal iron mixed in the zinc alloy powder.

Although the decantation alone is of course effective for improving the corrosion resistance of the zinc alloy powder, the combination with the magnetic sorting is more effective, and the combination of both processes may be repeated.

In the thus-obtained zinc alloy powder, the generation of hydrogen gas is restricted, and the corrosion resistance is improved and stabilized even if it contains no mercury.

When the zinc alloy powder without mercury is used as the cathode active substance for an alkaline cell, iron impurities signficantly activate the corrosion reaction and increase the generation of hydrogen gas, as compared with a zinc alloy powder containing mercury. However, it was found that the iron impurities which adhere to the surfaces of the zinc alloy powder and which are easily mixed therein in the production process have an adverse effect. In addition, since hydrogen gas is continuously generated from positions of the surfaces of the zinc alloy powder where traces of iron impurities are distributed, the effective removal of the impurities on the surfaces can restrict the generation of hydrogen gas, improve the leaktightness, decrease the scattering in the cell performance and stabilize the quality of alkaline cells without mercury.

Fig. 1 shows a flotation apparatus comprising the container 1 which is charged with water or an acid or alkaline aqueous solution as a medium for suspending the zinc alloy powder and the impurities which adhere to the surfaces of the zinc alloy powder, the horizontal ribbon blade 2 for agitating the zinc alloy powder and water or an acid or alkaline aqueous solution, and the discharge port 3 for discharging the suspended substances.

Fig. 2 shows a magnetic sorting apparatus comprising the belt conveyor 12 provided with the magnetic pulley 11 having a magnet having strong magnetic force bonded to the surface thereof.

When the zinc alloy powder 13 moved on the belt conveyor 12 falls, the ferromagnetic substances 14 such as iron and the like which are mixed in the zinc alloy powder 13 or adhere to the surfaces thereof are moved while adhering the magnetic pulley 11 through the belt and fall to a position substantially immediately below the magnetic pulley 11 shown in Fig. 2. The zinc alloy powder 13 which does not contain the ferromagnetic substances such as iron and the like adhering thereto falls to a distant position in the forward direction of the belt conveyor 12.

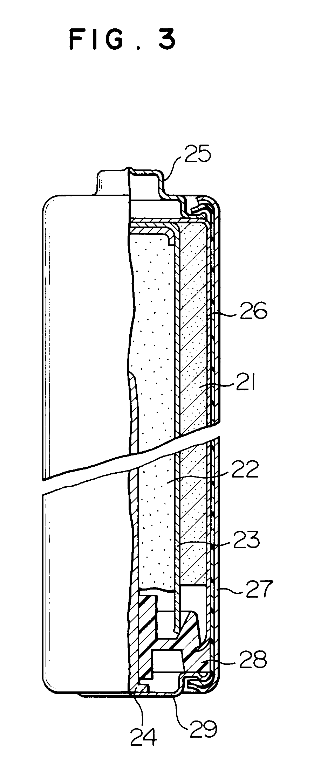

Fig. 3 is a sectional side view of an alkaline cell using as a cathode active substance the zinc alloy powder obtained in each of Examples 1 to 4 and Comparative Examples 1 and 2. In Fig. 3 reference numeral 21 denotes an anode mix; reference numeral 22, a cathode; reference numeral 23, a separator; reference numeral 24, a cathode collector; reference numeral 25, an anode terminal cap; reference numeral 26, a metal case; reference numeral 27, an outer package case; reference numeral 28, a polyethylene resin sealing member for sealing the opening of the metal case 26; and reference numeral 29, a bottom plate forming the cathode terminal.

EXAMPLE

Example 1:

0.05% by weight each of lead, indium and bismuth were added to a zinc base metal having purity of at least 99.97% and then uniformly melted. The resultant melt was atomized by compressed air, i.e., by a so-called atomizing method, to form a powder. The thus-obtained powder was classified by screening so that the particle size range is adjusted to 45 to 150 mesh. 500 kg of the thus-obtained zinc alloy powder was charged in the apparatus shown in Fig. 1, and was dispersed in water used as a medium for 15 minutes under agitation. After decantation was performed by the above-described process, the suspended substances obtained were filtrated off and then dried to obtain a zinc alloy powder.

Example 2:

0.05% by weight each of lead, indium and bismuth were added to a zinc base metal having purity of at least 99.97% and then uniformly melted. The resultant melt was atomized by compressed air, i.e., by a so-called atomizing method, to form a powder. The thus-obtained powder was classified by screening so that the particle size range is adjusted to 45 to 150 mesh. 500 kg of the thus-obtained zinc alloy powder was charged in the apparatus shown in Fig. 1, and was dispersed in an aqueous hydrochloric acid solution at a concentration of 5% by weight used as a medium for 15 minutes under agitation. After decantation was performed by the above-described process, the suspended substances obtained were subjected to the same water-washing treatment as the treatment using water as a medium, followed by filtration and drying, to obtain a zinc alloy powder.

Example 3:

A zinc alloy powder was obtained by the same method as that employed in Example 2 with the exception that an aqueous potassium hydroxide solution at a concentration of 10% by weight was used as a medium for decantation.

Example 4:

The zinc alloy powder obtained by the same method as that employed in Example 1 was subjected to magnetic sorting using the apparatus shown in Fig. 2 to obtain a zinc alloy powder.

The zinc alloy powder obtained in each of Examples 1 to 4 and the suspended substances separated therefrom were subjected to analysis of the iron content and a test of generation of hydrogen gas. The results obtained are shown in Table 1. The generation of hydrogen gas was tested by measuring the gas generation speed ($\mu$l/g•day) at 60°C using 10 g of each of the samples and as an electrolyte 5 ml of 40% by weight potassium hydroxide aqueous solution which is saturated with zinc oxide.

Table 1

| Example No. | Zinc Alloy Powder Composition (%) | | | | Flotation Sorting | Magnetic Sorting | Iron content (ppm) | | Gas Generation Speed at 60°C (μl/g·day) *3 |
|---|---|---|---|---|---|---|---|---|---|
| | Pb | In | Bi | Zn | | | Treated Powder | Separated Suspensions | |
| 1 | 0.05 | 0.05 | 0.05 | Bal. | water | No | 2 | 30 | 8 |
| 2 | 0.05 | 0.05 | 0.05 | Bal. | HCl*1 | No | 2 | 34 | 6 |
| 3 | 0.05 | 0.05 | 0.05 | Bal. | KOH*1 | No | 2 | 32 | 6 |
| 4 | 0.05 | 0.05 | 0.05 | Bal. | water | Yes | 2 | 27 | 6 |
| 1*2 | 0.05 | 0.05 | 0.05 | Bal. | No | No | 5 | – | 13 |
| 2*2 | 0.05 | 0.05 | 0.05 | Bal. | No | Yes | 4 | – | 11 |

*1: aqueous solution

*2: Comparative Example

*3: Treated Powder was used.

Comparative Example 1:

0.05% by weight each of lead, indium and bismuth were added to a zinc base metal having purity of at least 99.97% and then uniformly melted in the same way as in Example 1. The resultant melt was atomized by compressed air, i.e., by a so-called atomizing method, to form a powder. The thus-obtained powder was classified by screening so that the particle size range is adjusted to 45 to 150 mesh to obtain a sample.

Comparative Example 2:

The zinc alloy powder obtained by the same method as that employed in Comparative Example 1 was subjected to magnetic sorting using the apparatus shown in Fig. 2 to obtain a zinc alloy powder.

The zinc alloy powders obtained in Comparative Examples 1 and 2 were subjected to analysis of the iron content and a test of generation of hydrogen gas. The results obtained are shown in Table 1.

The results shown in Table 1 reveal that the iron contents of all samples of the present invention obtained in Examples 1 to 4 are low, and the iron contents of the suspended substances separated are high, as compared with those of the samples of Comparative Examples. This confirms the effect of decantation. The use of an acid or alkaline aqueous solution in place of water as a medium produces good results.

The results of Example 4 show that magnetic sorting performed after decantation produces good results, as compared with decantation only. On the other hand, as seen from the results of Comparative Example 2, magnetic sorting only does not produce good results, as compared with Examples of the invention. In Example 4, magnetic sorting treatment performed before decantation also produces the same effects.

The zinc alloy powder obtained in each of Examples 1 to 4 and Comparative Examples 1 and 2 was used as a cathode active substance of the alkaline-manganese cell shown in Fig. 3, and the gas generation speed of the cathode, the leaktightness of the cell and the open-circuit voltage characteristics were evaluated.

In the measurement of the gas generation speed of the cathode of each cell, partial discharge was performed to 25% at a discharge temperature of 20°C and a constant resistance of 1 Ω for a discharge duration to the final voltage of 0.9 V, and the gas generation speed ($\mu$l/Cell•day) during storage at 60°C was measured. The results obtained are shown in Table 2.

The leaktightness of the cell was evaluated by a method in which partial discharge was performed in the same way as that described above, and the number of leaks produced after storage at 60°C for 2 months was visually observed. The results obtained are shown in Table 2.

Table 2

| Example No. | LR6 (1 Ω, 25% partial discharge) | | Scattering of LR6 Open-Circuit Voltage (V) (n=10000) Number of Cells at (Average – 10 mV) or less | |
| --- | --- | --- | --- | --- |
| | Gas Generation Speed in Storage at 60°C (μl/cell·day) | Number of Leaks After Storage at 60°C for 2 Months (n=100) | Initial Stage | After Storage at 20°C for 3 Months |
| 1 | 195 | 0 | 0 | 0 |
| 2 | 165 | 0 | 0 | 0 |
| 3 | 170 | 0 | 0 | 0 |
| 4 | 165 | 0 | 0 | 0 |
| 1*1 | 280 | 3 | 0 | 12 |
| 2*1 | 250 | 2 | 0 | 9 |

*1: Comparative Example

In regard to the open-circuit voltage of each cell, the number of cells at a voltage of (average - 10 mV) or less was measured in the initial stage and after storage at 20°C for 3 months and shown as an index representing the degree of scattering in Table 2.

As is understood from the results shown in Table 2, the gas generation speeds of the cathodes of the cells respectively using as cathode active substances the powders treated in Examples 1 to 4 of the invention are lower than those of Comparative Examples. The results of the leaktightness test show that all the samples of Examples 1 to 4 produce no leak after storage at 60°C for 2 months and maintain practical leaktightness properties. While the samples of Comparative Example produce leak and cannot maintain practical leaktightness properties.

In regard to the open-circuit voltage of a cell, the numbers of cells at a voltage of (average - 10 mV) or less which respectively use the powders of Examples and Comparative Examples are zero in the initial stage. However, after storage at 20°C for 3 months, the numbers in Comparative Examples 1 and 2 are 12 and 9, respectively, and show large scattering, while the numbers in Examples are zero. This indicates that the cells of Examples have small scattering and stable quality.

As described above, in the present invention, the impurities which adhere to the surfaces of the zinc alloy powder are removed by dispersing the powder in water used as a medium under agitation. It is thus possible to attempt to restrict the generation of hydrogen gas, improve the corrosion resistance and the leaktightness, decrease the scattering in performance of cells and stabilize the product quality even by using the zinc alloy powder without mercury as a cathode active substance of an alkaline cell.

**Claims**

1. A method of producing a zinc alloy powder for a cell comprising removing impurities which adhere to the surfaces of a zinc alloy powder by dispersing said zinc alloy powder in water or an aqueous solution used as a medium.

2. A method of producing a zinc alloy powder for a cell according to Claim 1, wherein said aqueous solution is an acid or alkaline aqueous solution.

3. A method of producing a zinc alloy powder for a cell according to Claim 1 or 2, wherein said zinc alloy powder dispersed in said medium is previously subjected to magnetic sorting for removing magnetic impurities mixed in said zinc alloy powder.

4. A method of producing a zinc alloy powder for a cell according to Claim 1 or 2, wherein said zinc alloy powder dispersed in said medium is then subjected to magnetic sorting for removing magnetic impurities mixed in said zinc alloy powder.

5. An alkaline cell comprising a zinc alloy powder for a cell obtained by a method of any one of Claims 1 to 4.

# FIG. 1

# FIG. 2

# FIG. 3